# EUROPEAN PATENT SPECIFICATION

(11) **EP 1 413 995 B1**
(45) Date of publication and mention of the grant of the patent: **21.04.2010**
(21) Application number: 03256455.1
(22) Date of filing: 13.10.2003
(51) Int. Cl.: G07F 7/02

(54) **Automatic vending machine**
Verkaufsautomat
Distributeur automatique

(30) Priority: 22.10.2002 JP 2002307439
(43) Date of publication of application: 28.04.2004
(73) Proprietor: Sanden Corporation, Isesaki-shi, Gunma 372-8502 (JP)
(72) Inventor: Takahashi, Katsumi, Isesaki-shi, Gunma 372-8502 (JP)
(74) Representative: Haley, Stephen

(56) References cited:
- WO-A-96/09592
- PATENT ABSTRACTS OF JAPAN vol. 2002, no. 11, 6 November 2002 (2002-11-06) & JP 2002 197518 A (SANYO ELECTRIC CO LTD), 12 July 2002 (2002-07-12)
- PATENT ABSTRACTS OF JAPAN vol. 2002, no. 05, 3 May 2002 (2002-05-03) & JP 2002 032835 A (GLORY LTD), 31 January 2002 (2002-01-31)
- PATENT ABSTRACTS OF JAPAN vol. 2000, no. 12, 3 January 2001 (2001-01-03) & JP 2000 268239 A (ROHM CO LTD), 29 September 2000 (2000-09-29)

## Description

This invention relates to an automatic vending machine which allows transaction or payment by the use of a contactless IC chip, such as a contactless IC card, and, in particular, to a selling sequence of the automatic vending machine.

In recent years, a contactless IC card is wide spreading in various fields. In particular, the contactless IC card is increasingly used as an electronic purse. Herein, the contactless IC card means a card embedded with an IC chip capable of carrying out contactless communication. The contactless IC card is powered by a radio wave from a reader/writer to be put into operation. As one of applications of the contactless IC card used as the electronic purse, development is made of an automatic vending machine adapted to carry out cashless or non-cash sales of a product. Hereinafter, an existing automatic vending machine of the type will be described.

The existing automatic vending machine comprises a reader/writer for reading/writing data from/to a contactless IC card, a coin validator for identifying and checking the type and the validity of a deposited coin, a product dispenser for dispensing or delivering a stored product from a product storing portion to an outlet port, a plurality of product selection buttons for selecting corresponding products or items associated therewith, and a main control unit for controlling the above-mentioned components. The automatic vending machine is normally waiting in a cash sales mode and has a sales start button for changing the cash sales mode into a cashless sales mode or an e-money (electronic money) sales mode. In order to purchase a product at the automatic vending machine in the cashless sales mode, a user or consumer at first depresses the sales start button. Next, the user depresses one of the product selection buttons which corresponds to a desired product. Finally, the user holds the contactless IC card in the proximity of the reader/writer. If the balance of e-money recorded in the contactless IC card is not smaller than the price of the desired product, transaction is carried out between the automatic vending machine and the contactless IC card and the desired product is dispensed. For example, such automatic vending machine is disclosed in Japanese Unexamined Patent Publication No. 2001-167331.

In the above-mentioned automatic vending machine, however, purchase of the product in the cashless sales mode requires three steps, i.e., the step of depressing the sales start button, the step of depressing the product selection button, and the step of holding the contactless IC card in the proximity of the reader/writer. As compared with the cash sales mode requiring two steps, i.e., the step of depositing cash and the step of depressing the product selection button, the cashless sales mode is less convenient. It is therefore desired to develop an automatic vending machine more convenient for the user than the existing automatic vending machine.

WO-A-9609592 discloses a vending machine, a vending system and methods of operating same.

JP2002-197518A discloses an automatic vending machine.

Accordingly, the invention resides in an automatic vending machine, the automatic vending machine comprising:
a product storing portion for storing a plurality of products;
a plurality of product selection buttons for selecting corresponding products associated therewith;
a product dispenser for dispensing the products stored in the product storing portion;
a main control unit for controlling the product dispenser;
a reader/writer having an antenna and a controller and for reading/writing data via radio communication from/to a contactless IC chip serving as an electronic purse,
wherein:
   the main control unit is arranged to send, upon detecting depression of any one of the product selection buttons during a standby state, to the reader/writer a price notice representative of the price of a selected product corresponding to the product selection button being depressed, and the main control unit is arranged to request, upon receiving a transaction completion notice from the reader/writer, the product dispenser to dispense the selected product;
   the controller of the reader/writer is arranged to control, upon receiving the price notice from the main control unit, the reader/writer to establish a communicable state between the reader/writer and the contactless IC chip, to carry out transaction for the price between the reader/writer and the contactless IC chip entering a communicable zone, and to send the transaction completion notice to the main control unit when transaction is completed,
characterised in that:
the automatic vending machine further comprises a display unit, for displaying the amount of deposited cash and other information, and a balance display switch, the balance display switch formed in the proximity of the antenna of the reader/writer;
the controller of the reader/writer is arranged to control, upon detecting depression of the balance display switch, the reader/writer to establish the communicable state between the reader/writer and the contactless IC chip, to read a balance of e-money from the contactless IC chip entering into the communicable zone, and to send a balance notice representative of the balance to the main control unit;
the main control unit is arranged to make the display unit display the balance in response to the balance notice from the reader/writer, and
the controller of the reader/writer is arranged to send a transaction cancellation notice to the main control unit in case where communication between the reader/writer and the contactless IC chip cannot be established within a predetermined time period after reception of the price notice from the main control unit.

In the Drawings:
Fig. 1 is a front view of an automatic vending machine according to an embodiment of this invention;
Fig. 2 is a front view of a card unit of the automatic vending machine in Fig. 1;
Fig. 3 is a sectional view taken along a line 3-3 in Fig. 2;
Fig. 4 is a block diagram of a control system of the automatic vending machine in Fig. 1;
Fig. 5 is a view for describing an example of transaction data;
Fig. 6 is a view for describing an example of sales information;
Fig. 7 is a flow chart for describing an operation of the automatic vending machine during a standby state;
Fig. 8 is a flow chart for describing an operation of the automatic vending machine during a cash sales process;
Fig. 9 is a flow chart for describing an operation of the automatic vending machine during a card sales process;
Fig. 10 is a sequence chart corresponding to the flow chart in Fig. 9;
Fig. 11 is a flow chart for describing an operation of the automatic vending machine during a balance confirmation process;
Fig. 12 is a sequence chart corresponding to the flow chart in Fig. 11; and
Fig. 13 is a sequence chart for describing an operation of the automatic vending machine when a plurality of products are purchased during the card sales process.

Now, description will be made of an automatic vending machine according to one embodiment of this invention with reference to the drawing.

In this embodiment, description will be made of an automatic vending machine capable of selling a product not only in a cash mode but also in a cashless mode by the use of an object containing a contactless IC chip serving as an electronic purse. For example, the object containing the contactless IC chip may be a card, a wrist band, a strap, a wrist watch, a mobile telephone, or a PDA. In this embodiment, a contactless IC card (hereinafter may simply be referred to as an "IC card") embedded with a contactless IC chip will be described by way of example.

The contactless IC chip comprises a CPU, a memory, and an antenna. The contactless IC chip is adapted to carry out radio communication with a card unit (which will later be described) of the automatic vending machine when it is powered by the card unit. Communication between the contactless IC chip and the card unit is encrypted to improve safety and security. The contactless IC chip has a memory which memorizes a unique ID assigned to the IC chip for unique identification of the IC chip, as well as the balance of e-money.

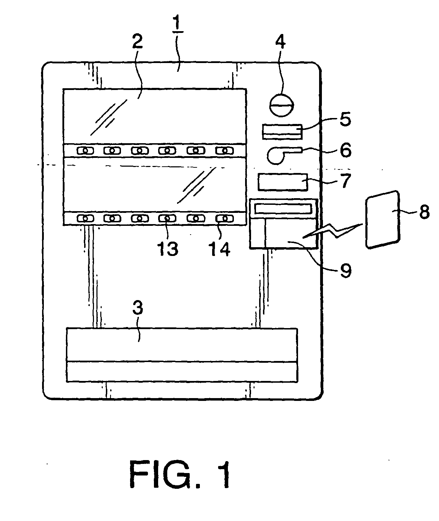

Referring to Fig. 1, the automatic vending machine 1 according to this embodiment has a front face provided with a product sample storing portion 2 storing a plurality of product samples (not shown), a product dispensing port 3 for dispensing a stored product, a coin slot 4, a bill slot 5, a return lever 6, a display unit 7 comprising a 7-segment LED or the like for displaying a product price and other information, and a card unit 9 for carrying out contactless communication with an IC card 8. To the dispensing port 3, the stored product is delivered by a product dispenser 10. Inside the coin slot 4 and the bill slot 5, a coin validator 11 and a bill validator 12 are disposed, respectively. The product sample storing portion 2 is provided with a plurality of product selection buttons 14 corresponding to a plurality of products or items. Each of the product selection buttons 14 contains an available lamp 13 indicating an availability of a corresponding product when it is turned on.

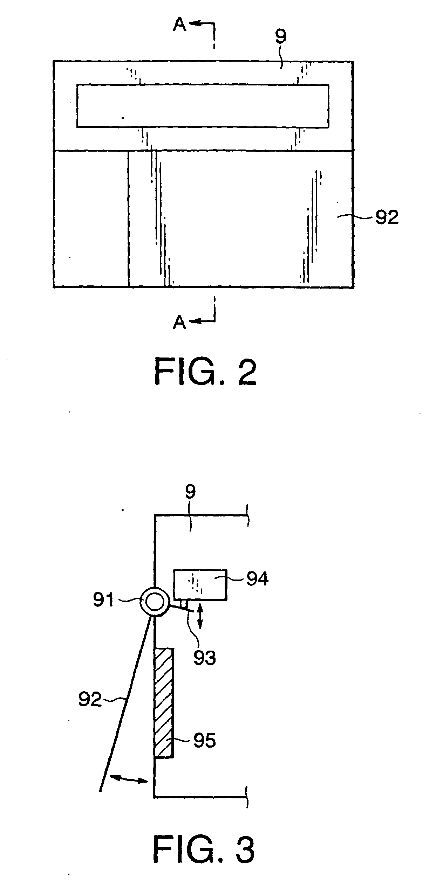

Referring to Figs. 2 and 3, the card unit 9 has a box-like housing provided with a rotatable or rotatable plate 92 disposed on a front face of the housing and having an upper end supported by a support shaft 91 so that the rotatable plate 92 is rotatable around the support shaft 91. The support shaft 91 has a spring (not shown) for urging the rotatable plate 92 frontward (leftward in Fig. 3) so that, in a normal state, a lower end of the rotatable plate 92 is spaced at a distance of about several millimeters from the front face of the housing. Inside the card unit 9, i.e., inside the housing, a balance display switch 94 is disposed. The balance display switch 94 comprises a microswitch having a contact to be turned on/off by a rotatable member 93 attached to the support shaft 91. When the rotatable plate 92 is urged towards the housing against urging force of the spring of the support shaft 91, the rotatable plate 92 and the rotatable member 93 attached to the support shaft 91 are rotated together. The balance display switch 94 is pressed by the rotatable member 93 to be turned on. If urging the rotatable plate 92 towards the housing is stopped, the rotatable plate 92 is returned forward into its initial position by the urging force of the spring of the support shaft 91 and the balance display switch 94 is turned off. Inside the card unit 9, an antenna 95 for communication with the IC card 8 is disposed behind the rotatable plate 92. With the above-mentioned structure, when the user holds the IC card 8 in his hand and depresses the rotatable plate 92 by the same hand, the IC card 8 is present in the proximity of the card unit 9 when the balance display switch 94 detects depression of the rotatable plate 92. Therefore, communication between the IC card 8 and the card unit 9 can be reliably carried out.

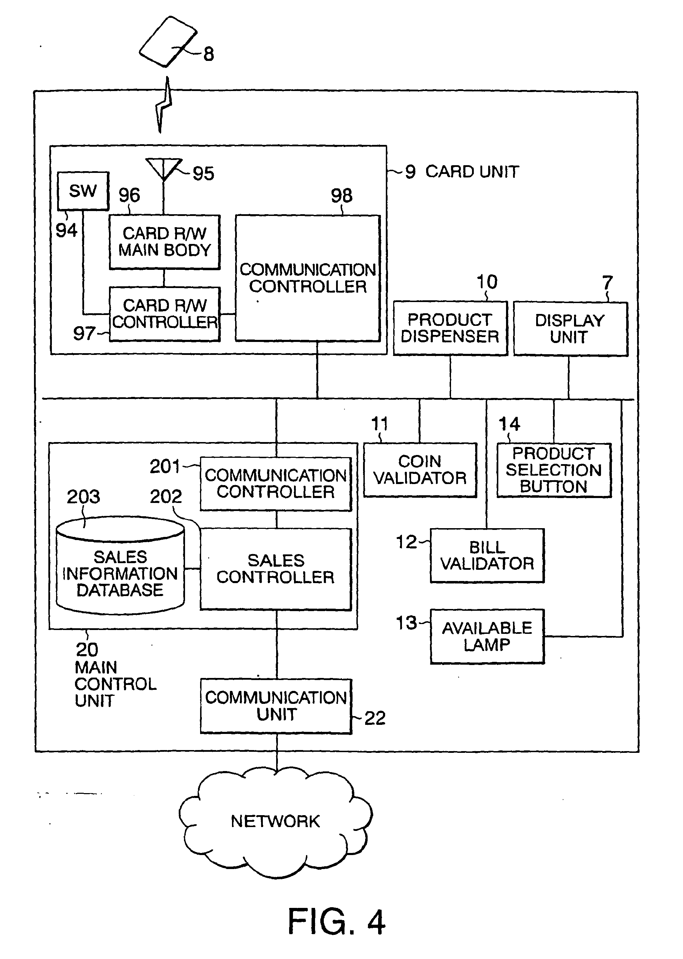

Next referring to Fig. 4, description will be made of a control system of the automatic vending machine. For simplicity of illustration, characteristic parts alone are shown in Fig. 4.

As shown in Fig. 4, the control system of the automatic vending machine 1 comprises the card unit 9 for reading/writing information from/to the IC card 8 in a contactless mode, the product dispenser 10, the coin validator 11, the bill validator 12, the available lamp 13, the product selection button(s) 14, the display unit 7, a main control unit 20 for controlling the above-mentioned components, a bus 21 for connecting the above-mentioned components to one another, and a communication unit 22 for connecting the main control unit 20 to an external network. Although not shown in Fig. 4, a switch attached to the return lever 6 and a cooling apparatus, such as a compressor, are also connected to the bus 21.

The card unit 9 comprises the balance display switch 94, the antenna 95, a card read/writer main unit (hereinafter called a "card R/W main unit") 96 for communicating with the IC card 8 to read/write various data from/to the IC card 8 in a contactless mode, a card R/W controller 97 for controlling operations of the card R/W main unit 96 in response to instructions from the main control unit 20, and a communication controller 98 as an interface with the bus 21.

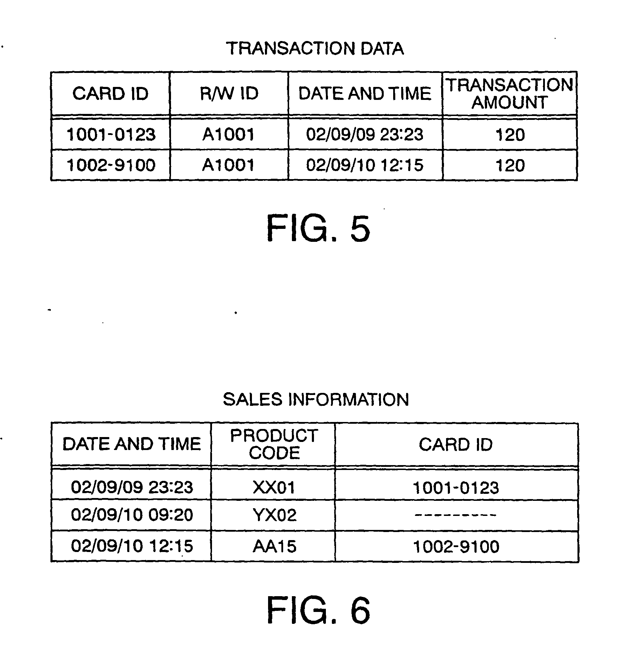

The card R/W main unit 96 carries out various operations including an operation of controlling radiation or emission of a radio wave from the antenna 95 to establish and cancel a communicable state with the IC card 8, an operation of authenticating the IC card 8 entering into a communicable zone, an operation of reading/writing various data such as a balance of e-money in the IC card 8, and so on. When e-money transaction is carried out between the IC card 8 and the card unit 9, transaction information is memorized in a memory (not shown) and transmitted through the communication unit 22 to a transaction computer (not shown). The transaction information may include, for example, a card ID, an ID of the card R/W main unit, date and time of transaction, and a transaction amount as shown in Fig. 5.

The main control unit 20 comprises a communication controller 201 as an interface with the bus 21, a sales controller 202 for controlling the card unit 9 and the product dispenser 10 to control sales of stored products, and a sales information database 203 for storing sales information. For example, the sales information database 203 stores various data, such as date and time of sales, a product code of a sold product, and a card ID if transaction is made by the IC card 8. The data stored in the sales information database 203 are transmitted through the communication unit 22 to a managing computer (not shown).

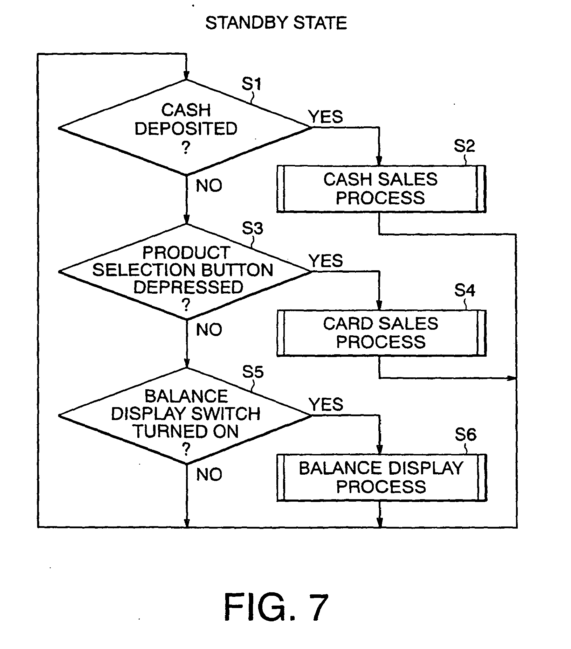

Next referring to Figs. 7 through 12, operations of the automatic vending machine 1 will be described.

At first referring to Fig. 7, an operation during a standby state will be described. In the standby state, the automatic vending machine 1 monitors whether or not cash is deposited into the coin validator 11 and/or the bill validator 12 (step 81), whether or not the product selection button 14 is depressed (step S3), and whether or not the balance display switch 94 is depressed (step S5). If deposition of cash is detected (Yes in step S1), the operation proceeds to a product sales process by cash, i.e., a cash sales process (step S2). If depression of the product selection button 14 is detected (Yes in step S3), the operation proceeds to a product sales process via transaction using the IC card 8, i.e., a card sales process (step S4). If depression of the balance display switch 94 is detected (Yes in step S5), the operation proceeds to a balance display process of displaying a balance of e-money in the IC card 8 (step S6). Hereinafter, each of the processes in the steps S2, S4, and S6 will be described.

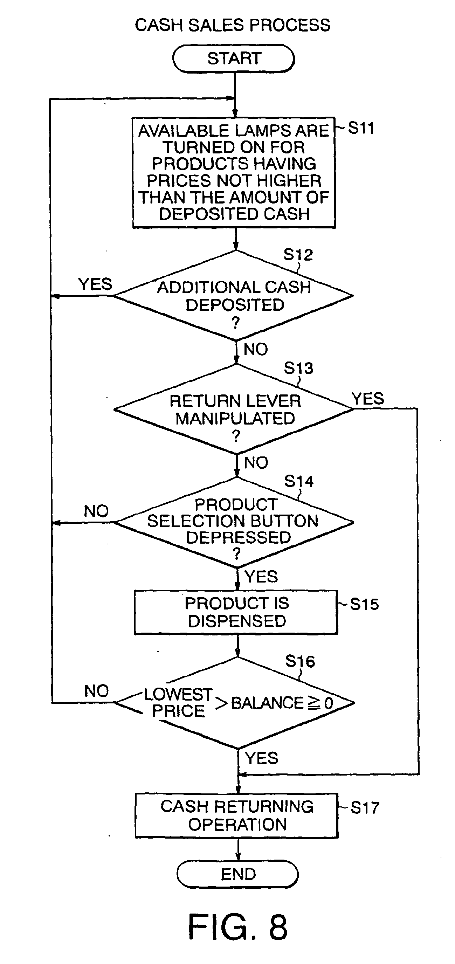

At first referring to Fig. 8, the cash sales process will be described. The cash sales process is similar to that in an existing automatic vending machine. For those products or items having prices not higher than the amount of deposited cash, corresponding ones of the available lamps 13 are turned on (step S11). Judgment is made about whether or not additional cash is deposited (step S12). If additional cash is deposited (Yes in step S12), the operation returns to the step S11. Otherwise (No in step S12), judgment is made about whether or not the return lever 6 is manipulated (step S13). If the return lever 6 is manipulated (Yes in step S13), the operation proceeds to a step S17 to carry out a cash returning operation. Otherwise (No in step S13), judgment is made about whether or not any one of the product selection buttons 14 corresponding to the available lamps 13 being turned on is depressed (step S14). If depression of such product selection button 14 is detected (Yes in step S14), the product dispenser 10 is controlled to dispense a corresponding product as a sold product (step S15). Judgment is made about whether or not the balance obtained by subtracting or deducting the price of the sold product from the amount of the deposited cash falls within a range not smaller than zero and smaller than a lowest price among all products (step S16). If the balance falls within the above-mentioned range (Yes in step S16), the balance is returned as a change (step S17). If the balance is not smaller than the lowest price, the operation returns to the step S11 to enable a user to continuously purchase another product. By the above-mentioned steps, the product can be sold by the use of cash such as coins and bills.

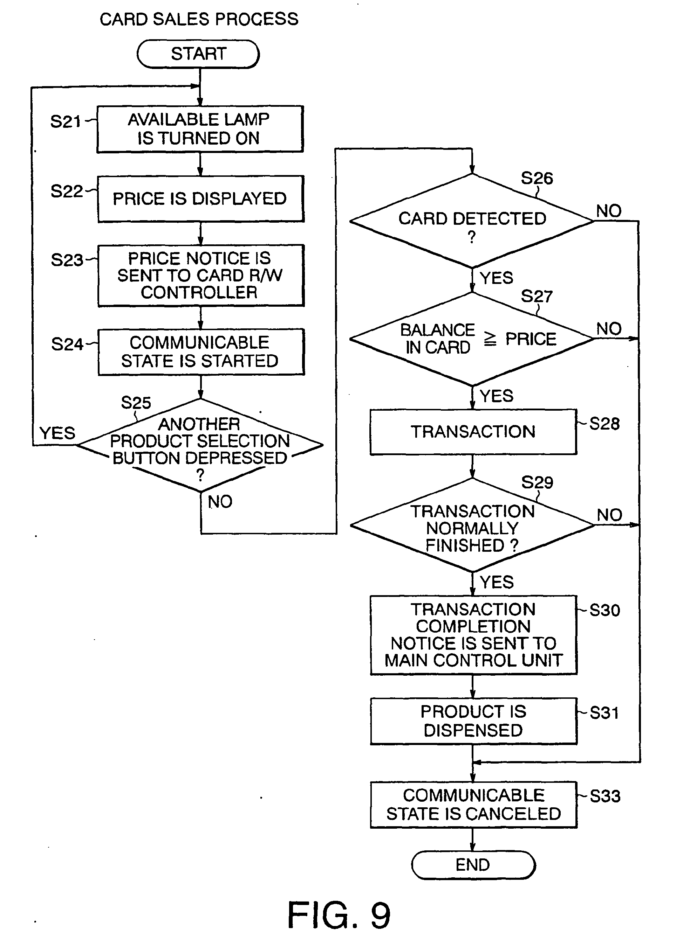

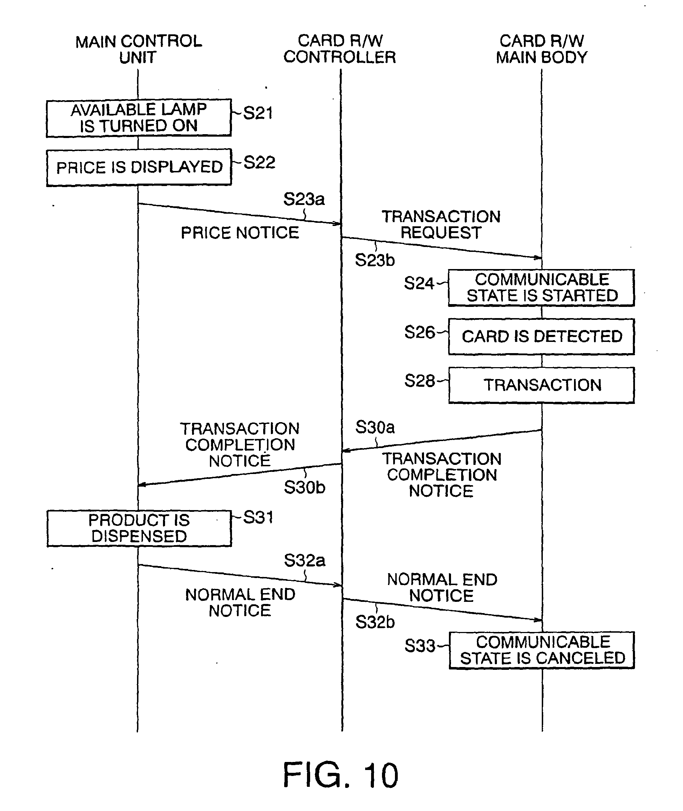

Next referring to Figs. 9 and 10, description will be made of the product sales process via transaction using the IC card 8 (card sales process). A flow chart in Fig. 9 corresponds to a sequence chart in Fig. 10 showing the flow of data among the main control unit 20, the card R/W controller 97, and the card R/W main unit 96 during the card sales process.

As described above, the card sales process is started by depression of the product selection button 14 during the standby state. At first, the main control unit 20 turns on one of the available lamps 13 which corresponds to the product selection button 14 being depressed (step S21). Next, the price of the product corresponding to the product selection button 14 is displayed on the display unit 7 (step S22). The main control unit 20 sends a price notice representative of the price to the card R/W controller 97 of the card unit 9 (step S23, step S23a in Fig. 10). The card R/W controller 97 sends a transaction request to the card R/W main unit 96 to request deduction of the amount of e-money corresponding to the price from the IC card 8 (step S23b in Fig. 10). The card R/W main unit 96 starts radiation or emission of a radio wave to be put into a communicable state with the IC card 8 (step S24). Then, judgment is made about whether or not another product selection button 14 is depressed (step S25). If another product selection button 14 is depressed (Yes in step S25), the operation returns to a step S21 to execute the sales process for another product re-selected by another product selection button 14 in the manner similar to that mentioned above. Upon re-selection of another product, the available lamp 13 corresponding to the product selected first is turned off.

If another product selection button 14 is not depressed (No in step S25), the card R/W main unit 96 monitors whether or not the IC card 8 enters into its communicable zone (step S26). If the IC card 8 enters into its communicable zone (Yes in step S26), the card R/W main unit 96 reads the balance of e-money from the IC card 8 and judges whether or not the balance is equal to or greater than the price (step S27). If the balance is greater than the price (Yes in step S27), transaction is carried out (step S28). Judgment is made about whether or not the transaction is normally finished (step S29). If the transaction is normally finished (Yes in step S29), the card R/W main unit 96 sends a transaction completion notice and a new balance through the card R/W controller 97 to the main control unit 20 (step S30, steps S30a and S30b in Fig. 10). Supplied with the transaction completion notice from the card R/W controller 97, the main control unit 20 controls the product dispenser 10 to dispense the product (step S31) and sends a normal end notice through the card R/W controller 97 to the card R/W main unit 96 (steps S32a and S32b in Fig. 10). Supplied with the normal end notice, the card R/W main unit 96 cancels the communicable state with the IC card 8 (step S33).

Advantageously, the main control unit 20 makes the display unit 7 display the new balance of e-money received from the card R/W main unit 96 after the product is dispensed. Although not shown in the figure, if communication with the IC card 8 can not be established within a predetermined time period after depression of the product selection button 14, the card R/W main unit 96 sends a transaction cancellation notice through the card R/W controller 97 to the main control unit 20. Supplied with the transaction cancellation notice, the main control unit 20 executes a canceling operation, for example, turning off of the available lamp 13. Similarly, if the return lever 6 is manipulated after depression of the product selection button 14, the main control unit 20 sends a transaction cancellation notice through the card R/W controller 97 to the card R/W main unit 96 and executes a canceling operation, for example, turning off of the available lamp 13.

Sometimes, the transaction in the step S28 is not normally finished in various reasons. As one of the reasons, the balance of e-money is smaller than the price. In this case, it is advantageous that an alarm is generated by the use of a buzzer or a lamp provided in the card unit 9. Preferably, the card R/W main unit 96 sends a transaction cancellation notice and the balance of e-money through the card R/W controller 97 to the main control unit 20 and the main control unit 20 supplied with the transaction cancellation notice executes a canceling operation, for example, turning off of the available lamp 13 and flash display of the balance of e-money on the display unit 7.

By the above-mentioned steps, the user can purchase a product by the two steps, i.e., the step of depressing the product selection button 14 and the step of holding the IC card 8 in the proximity of the card unit 9.

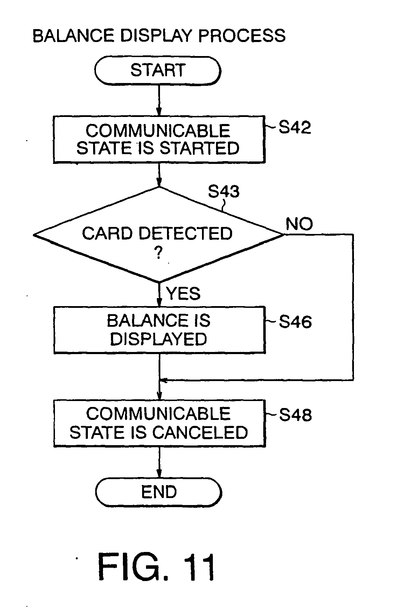

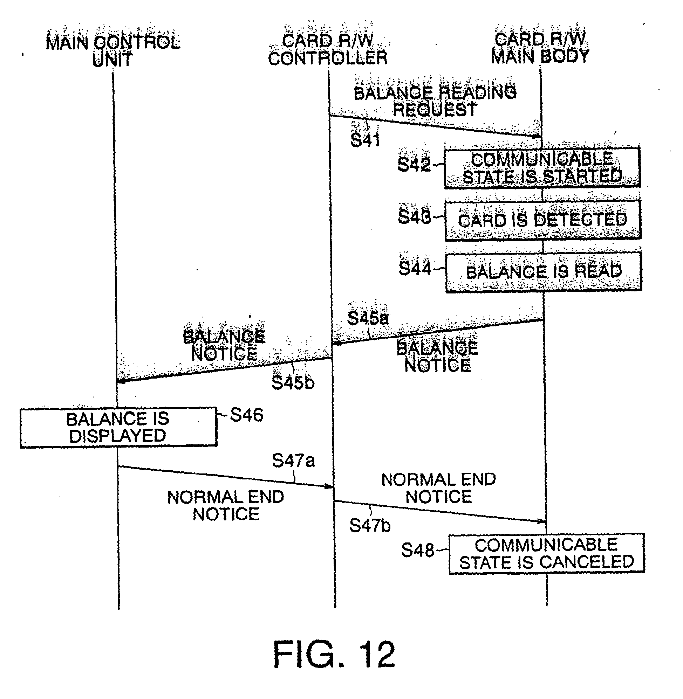

Next referring to Figs. 11 and 12, description will be made of the balance display process of making the display unit 7 display the balance of e-money in the IC card 8. A flow chart in Fig. 11 corresponds to a sequence chart in Fig. 12 showing the flow of data among the main control unit 20, the card R/W controller 97, and the card R/W main unit 96 during the balance display process.

It is assumed here that the user holding the IC card 8 in his hand depresses the rotatable plate 92 of the card unit 9 by the same hand. By depressing the rotatable plate 92, the balance display switch 94 is turned on. Upon detecting that the balance display switch 94 is turned on during the standby state, the balance display process is started. At first, the card R/W controller 97 sends a balance reading request to the card R/W main unit 96 (step S41 in Fig. 12). Supplied with the balance reading request, the card R/W main unit 96 starts radiation or emission of a radio wave to be put into a communicable state with the IC card 8 (step S42). The card R/W main unit 96 monitors whether or not the IC card 8 enters into its communicable zone (step S43). If the card R/W main unit 96 detects that the IC card 8 enters into its communicable zone (Yes in step S43), the card R/W main unit 96 reads the balance of e-money from the IC card 8 (step S44 in Fig. 12) and sends a balance notice representative of the balance of e-money through the card R/W controller 97 to the main control unit 20 (step S45, steps S45a and S45b in Fig. 12). Supplied with the balance notice, the main control unit 20 makes the display unit 7 display the balance of e-money (step S46) and sends a normal end notice through the card R/W controller 97 to the card R/W main unit 96 (steps S47a and S47b in Fig. 12). Supplied with the normal end notice, the card R/W main unit 96 cancels the communicable state with the IC card 8 (step S48).

Although not shown in the figure, in case where communication with the IC card 8 can not be established within a predetermined time period after detecting that the balance display switch 94 is turned on, for example, in case where the user depresses the rotatable plate 92 without holding the IC card 8 in his hand, the card R/W main unit 96 sends a transaction cancellation notice through the card R/W controller 97 to the main control unit 20. Supplied with the transaction cancellation notice, the main control unit 20 executes a predetermined canceling operation.

By the above-mentioned steps, the user can confirm the balance of e-money in the IC card 8 by only one step of depressing the rotatable plate 92 of the card unit 9 with the IC card 9 held in his hand.

As described above, the automatic vending machine 1 according to the embodiment is improved in convenience and user-friendliness as compared with the existing automatic vending machine because the step of purchasing a product using the IC card 8 can be completed by the two steps, i.e., the step of depressing the product selection button 14 and the step of holding the IC card 8 in the proximity of the card unit 9. Furthermore, the user can confirm the balance of e-money in the IC card 8 by only one step of depressing the rotatable plate 92 of the card unit 9 with the IC card 8 held in his hand. Therefore, the convenience is further improved.

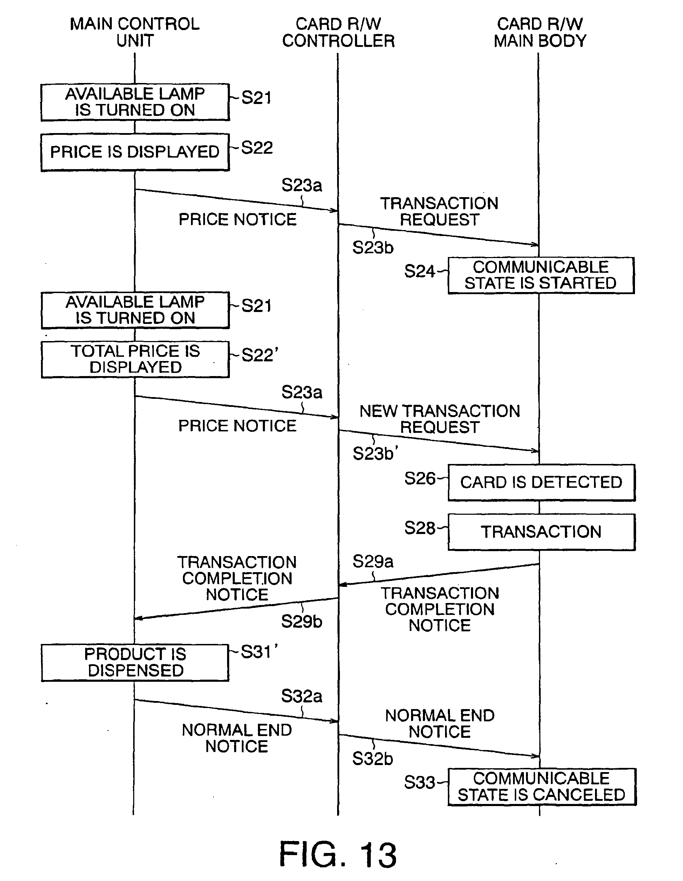

Although this invention has been described in conjunction with only one embodiment thereof, this invention is not restricted thereto. For example, the automatic vending machine in the above-mentioned embodiment is arranged so that, in case where another product selection button 14 is depressed after the product selection button 14 is depressed during the standby state, a sales process for a first product corresponding to the product selection button 14 depressed first is canceled and, instead, a sales process for a second product corresponding to the product selection button 14 depressed second is carried out. Alternatively, both of the first and the second products may simultaneously be sold. Such operation will be described with reference to Figs. 9 and 13. A sequence chart in Fig. 13 shows the flow of data among the main control unit 20, the card R/W controller 97, and the card R/W main unit 96 during the card sales process for a plurality of products.

In this case, the step S22 in Fig. 9 described above is followed by a step S22' in Fig, 13. Specifically, if a second or a subsequent product selection button 14 is depressed after a first button 14 is depressed, the main control unit 20 makes the display unit 7 display the total price, i.e., the total amount of prices of the first and the second products or the first through the subsequent products and sends a price notice to the card R/W controller 97. It is noted here that the price notice represents the price of a single product or item as the second or the subsequent product even if the price notice presently received is a second or a subsequent price notice. Upon reception of the second or the subsequent price notice, the card R/W controller 97 calculates the total amount of the prices previously and presently received and sends to the card R/W main unit 96 a new transaction request for cancellation of a transaction amount previously informed and execution of transaction for the total amount as a new transaction amount (step S23b' in Fig. 13). Upon reception of a transaction completion notice from the card R/W controller 97, the main control unit 20 makes the product dispenser 10 successively dispense the products corresponding to a plurality of the product selection buttons 14 successively depressed (step S31' in Fig. 13). Thus, a plurality of products can be collectively sold.

In the foregoing embodiment, the balance display switch 94 comprises a microswitch. However, any other detecting means such as an optical sensor may be used as the balance display switch 94.

As described above, according to the invention, an operation required for a user to purchase a product is completed by two steps, i.e., the step of depressing the product selection button and the step of holding "an object having a contactless IC chip" in the proximity of the antenna. Thus, the vending machine is highly convenient and user-friendly. For example, the "object having a contactless IC chip" may be a card, a wrist band, a strap, a wristwatch, a mobile telephone, or a PDA (Personal Digital Assistant) embedded with the contactless IC chip.

The user can confirm the balance of e-money in the contactless IC chip without purchasing a product. Therefore, the convenience is improved. In particular, the balance display switch is provided in the proximity of the antenna of the reader/writer. Therefore, if the user holds an object having a contactless IC chip, such as an IC card, in his hand and depresses the balance display switch by the same hand, the balance is immediately read and displayed on the display unit. Thus, an operation required for the user to confirm the balance is completed by a single step of depressing the balance display switch with the "object having a contactless IC chip" held in his hand. Thus, the convenience is improved.

Even if the user who desires cash sales or cash transaction erroneously depresses the product selection button prior to cash deposition, transaction using the contactless IC chip is canceled after lapse of the predetermined time period from depression of the product selection button. Thereafter, ordinary cash sales can be started.

It is possible to sell a plurality of products in single transaction using the contactless IC chip. Specifically, an operation required for the user to purchase a plurality of products is completed by two steps, i.e., the step of depressing the product selection button or buttons a plurality of times and the step of holding the "object having a contactless IC chip" in the proximity of the antenna. Thus, the convenience is improved.

## Claims

1. An automatic vending machine (1), the automatic vending machine comprising:
a product storing portion (2) for storing a plurality of products;
a plurality of product selection buttons (14) for selecting corresponding products associated therewith;
a product dispenser (10) for dispensing the products stored in the product storing portion;
a main control unit (20) for controlling the product dispenser;
a reader/writer having an antenna (95) and a controller (97) and for reading/writing data via radio communication from/to a contactless IC chip serving as an electrionic purse.
wherein:
the main control unit is arranged to send, upon detecting depression of any one of the product selection buttons during a standby state, to the reader/writer a price notice representative of the price of a selected product corresponding to the product selection button being depressed, and the main control unit is arranged to request, upon receiving a transaction completion notice from the reader/writer, the product dispenser to dispense the selected product;
the controller of the reader/writer is arranged to control, upon receiving the price notice from the main control unit, the reader/writer to establish a communicable state between the reader/writer and the contactless IC chip, to carry out transaction for the price between the reader/writer and the contactless IC chip entering a communicable zone, and to send the transaction completion notice to the main control unit when transaction is completed,
**characterised in that**:
the automatic vending machine further comprises a display unit (7), for displaying the amount of deposited cash and other information, and a balance display switch (94), the balance display switch formed in the proximity of the antenna of the reader/writer;
the controller of the reader/writer is arranged to control, upon detecting depression of the balance display switch, the reader/writer to establish the communicable state between the reader/writer and the contactless IC chip, to read a balance of e-money from the contactless IC chip entering into the communicable zone, and to send a balance notice representative of the balance to the main control unit;
the main control unit is arranged to make the display unit display the balance in response to the balance notice from the reader/writer; and
the controller of the reader/writer is arranged to send a transaction cancellation notice to the main control unit in case where communication between the reader/writer and the contactless IC chip cannot be established within a predetermined time period after reception of the price notice from the main control unit.

2. An automatic vending machine (1) according to claim 1, wherein:
the controller (97) of the reader/writer is arranged to control, if a plurality of price notices are supplied from the main control unit (20) prior to establishment of communication between the reader/writer and the contactless IC chip, the reader/writer to execute transaction for a total amount of prices in the price notices supplied thereto; and
the main control unit is arranged to request upon reception of the transaction completion notice from the reader/writer, the product dispenser (10) to dispense a plurality of products corresponding to the price notices.

3. An automatic vending machine (1) according to claim 1 or claim 2, wherein the balance display switch (94) is operable by a user's hand, the machine being constructed such that the contactless IC chip, when held in said hand, is disposed in the communicable zone during operation of the balance display switch by said hand.

## Patentansprüche

1. Verkaufsautomat (1), wobei der Verkaufsautomat aus Folgendem besteht:
einem Produktlagerungsabschnitt (2) zum Lagern einer Vielfalt an Produkten;
einer Vielfalt an Produktwahltasten (14) zur Auswahl von korrespondierenden Produkten, die damit assoziiert werden;
einem Produktspender (10) zur Abgabe der Produkte, die im Produktlagerungsabschnitt gelagert werden;
einem Hauptsteuergerät (20) zur Steuerung des Produktspenders;
einem Leser/Schreiber, der eine Antenne (95) und eine Steuerung (97) hat, und zum Lesen/Schreiben von Daten über Funkkommunikation vom/zum kontaktlosen IC-Chip dient, der als elektronische Geldbörse dient.
Wobei:
das Hautsteuergerät so eingerichtet ist, dass es nach der Feststellung des Drückens irgendeiner der Produktwahltasten während eines Standby-Zustands an den Leser/Schreiber eine Preisnotiz sendet, die für den Preis eines gewählten Produkts charakteristisch ist und mit der gedrückten Produktwahltaste korrespondiert, und das Hauptsteuergerät so eingerichtet ist, dass es nach Empfang einer Notiz zur Beendigung eines Geschäftsvorgangs vom Leser/Schreiber den Produktspender zur Abgabe des gewählten Produkts auffordert,
die Steuerung des Lesers/Schreibers so eingerichtet ist, dass sie nach Empfang der Preisnotiz vom Hauptsteuergerät den Leser/Schreiber kontrolliert, um einen kommunizierbaren Zustand zwischen dem Leser/Schreiber und dem kontaktlosen IC-Chip zu etablieren, um einen Geschäftsvorgang für den Preis zwischen dem Leser/Schreiber und dem kontaktlosen IC-Chip, der in eine kommunizierbare Zone eintritt, auszuführen, und die Notiz zur Beendigung eines Geschäftsvorgangs an das Hauptsteuergerät sendet, wenn der Geschäftsvorgang beendet ist,
**dadurch gekennzeichnet, dass**
der Verkaufsautomat weiterhin eine Anzeigeeinheit (7) zur Anzeige der Menge des abgegebenen Bargelds und andere Informationen umfasst, und einen Schalter zur Anzeige des Guthabens (94), wobei der Schalter zur Anzeige des Guthabens in der Nähe der Antenne des Lesers/Schreibers gebildet ist;
die Steuerung des Lesers/Schreibers so eingerichtet ist, dass sie beim Erkennen des Drückens des Schalters zur Anzeige des Guthabens den Leser/Schreiber kontrolliert, um den kommunizierbaren Zustand zwischen dem Leser/Schreiber und dem kontaktlosen IC-Chip zu etablieren, um ein Guthaben von E-Geld vom kontaktlosen IC-Chip, der in die kommunizierbare Zone eintritt, zu lesen, und um eine Guthabensnotiz, die dem Guthaben am Hauptsteuergerät entspricht, zu senden;
das Hauptsteuergerät so eingerichtet ist, dass es die Anzeigeeinheit veranlasst, das Guthaben in Bezug auf die Guthabensnotiz vom Leser/Schreiber anzuzeigen; und
die Steuerung des Lesers/Schreibers so eingerichtet ist, dass sie eine Notiz zur Stornierung eines Geschäftsvorgangs zum Hauptsteuergerät in dem Fall sendet, dass die Kommunikation zwischen dem Leser/Schreiber und dem kontaktlosen IC-Chip nicht innerhalb eines vorbestimmten Zeitraums nach dem Empfang der Preisnotiz vom Hauptsteuergerät etabliert werden kann.

2. Verkaufsautomat (1) nach Anspruch 1, wobei:
die Steuerung (97) des Lesers/Schreibers so eingerichtet ist, dass sie kontrolliert, wenn eine Vielfalt an Preisnotizen vom Hauptsteuergerät (20) geliefert wurden, bevor eine Kommunikation zwischen dem Leser/Schreiber und dem kontaktlosen IC-Chip etabliert wurde, und der Leser/Schreiber den Geschäftsvorgang zu einem Endbetrag der Preise in den Preisnotizen, die dazu bereitgestellt wurden, durchführt, und
das Hauptsteuergerät so eingerichtet ist, dass es nach dem Empfang der Notiz zur Beendigung eines Geschäftsvorgangs vom Leser/Schreiber anfordert, dass der Produktspender (10) eine Vielfalt an Produkten, die mit den Preisnotizen korrespondieren, abgibt.

3. Verkaufsautomat (1) gemäß Anspruch 1 oder Anspruch 2, wobei der Schalter zur Anzeige des Guthabens (94) durch die Hand eines Benutzers betätigt werden kann, wobei die Maschine so konstruiert wurde, dass der kontaktlose IC-Chip, wenn er in der Hand gehalten wird, in der kommunizierbaren Zone während des Betriebs des Schalters zur Anzeige des Guthabens von dieser Hand angeordnet wird.

## Revendications

1. Distributeur automatique (1), le distributeur automatique comportant :
une partie de stockage de produits (2) destiné à stocker une pluralité de produits ;
une pluralité de boutons de sélection de produit (14) destiné à sélectionner des produits correspondants associés à ceux-ci ;
un dispositif de distribution de produit (10) destiné à distribuer les produits stockés dans la partie de stockage de produits ;
une unité principale de commande (20), destinée à commander le dispositif de distribution de produit ;
un lecteur/graveur ayant une antenne (95) et un contrôleur (97) et destiné à écrire/graver des données par radiocommunication en provenance/vers une puce à circuit intégré sans contact tenant lieu de porte-monnaie électronique ;
dans lequel:
l'unité principale de commande est arrangée pour envoyer, lors de la détection de l'abaissement de l'un quelconque des boutons de sélection de produit au cours d'un état d'attente, au lecteur/graveur un avis de prix représentant le prix d'un produit sélectionné correspondant au bouton de sélection de produit abaissé, et l'unité principale de commande est arrangée pour demander, lors de la réception d'un avis de fin de transaction en provenance du lecteur/graveur, au dispositif de distribution de produit de distribuer le produit sélectionné ;
le contrôleur du lecteur/graveur est arrangé pour commander, lors de la réception de l'avis de prix en provenance de l'unité principale de commande, le lecteur/graveur pour établir un état communicable entre le lecteur/graveur et la puce à circuit intégré sans contact, pour effectuer une transaction pour le prix entre le lecteur/graveur et la puce à circuit intégré sans contact entrant dans une zone communicable, et pour envoyer l'avis de fin de transaction à l'unité principale de commande quand la transaction est terminée,
**caractérisé en ce que** :
le distributeur automatique comporte par ailleurs une unité d'affichage (7), destinée à afficher le montant de l'argent déposé et d'autres informations, et un interrupteur d'affichage de solde (94), l'interrupteur d'affichage de solde étant formé à proximité de l'antenne du lecteur/graveur ;
le contrôleur du lecteur/graveur est arrangé pour commander, lors de la détection de l'abaissement de l'interrupteur d'affichage de solde, le lecteur/graveur pour établir l'état communicable entre le lecteur/graveur et la puce à circuit intégré sans contact, pour lire un solde d'argent électronique en provenance de la puce à circuit intégré sans contact entrant dans la zone communicable, et pour envoyer un avis de solde représentant le solde à l'unité principale de commande ;
l'unité principale de commande est arrangée pour amener l'unité d'affichage à afficher le solde en réponse à l'avis de solde en provenance du lecteur/graveur ; et
le contrôleur du lecteur/graveur est arrangé pour envoyer un avis d'annulation de transaction à l'unité principale de commande au cas où la communication entre le lecteur/graveur et la puce à circuit intégré sans contact ne peut être établie dans les limites d'une période de temps prédéterminée après réception de l'avis de prix en provenance de l'unité principale de commande.

2. Distributeur automatique (1) selon la revendication 1, dans lequel :
le contrôleur (97) du lecteur/graveur est arrangé pour commander, si une pluralité d'avis de prix sont fournis en provenance de l'unité principale de commande (20) avant l'établissement de la communication entre le lecteur/graveur et la puce à circuit intégré sans contact, le lecteur/graveur à exécuter une transaction pour un montant total des prix dans les avis de prix remis à celui-ci ; et
l'unité principale de commande est arrangée pour demander, lors de la réception de l'avis de fin de transaction en provenance du lecteur/graveur, au dispositif de distribution de produit (10) de distribuer une pluralité de produits correspondant aux avis de prix.

3. Distributeur automatique (1) selon la revendication 1 ou la revendication 2, dans lequel l'interrupteur d'affichage de solde (94) est actionnable par la main d'un utilisateur, la machine étant construite de sorte que la puce à circuit intégré sans contact, lorsque tenue dans ladite main, est disposée dans la zone communicable en cours de fonctionnement de l'interrupteur d'affichage de solde par ladite main.
